# EUROPEAN PATENT APPLICATION

(11) **EP 4 848 561 A1**
(43) Date of publication of application: **02.12.2026**
(21) Application number: 24920416.5
(22) Date of filing: 23.01.2024
(51) Int. Cl.: H02M 7/48

(54) **POWER CONDITIONER AND POWER CONTROL METHOD**

(71) Applicant: TMEIC Corporation, Tokyo 104-0031 (JP)
(72) Inventor: SEKI, Kosuke, Tokyo 104-0031 (JP)
(74) Representative: Winter, Brandl - Partnerschaft mbB
(86) International application number: PCT/JP2024/001829
(87) International publication number: WO 2025/158526

(57) **Abstract**

A power conditioner includes an inverter which converts DC power into AC power and supplies the AC power to a power grid and a control device which controls the inverter. The control device estimates a grid voltage on the basis of an output current from the inverter and a characteristic of an impedance between the inverter and the power grid. The control device also generates a correction voltage on the basis of a voltage left after removal of a high-frequency component from a difference voltage which is a difference between the estimated grid voltage and a target voltage. The control device further gives an instruction to the inverter on the basis of a voltage obtained by adding the correction voltage to the target voltage.

## Description

### Technical Field

The present disclosure relates to a technique for controlling a power conditioner.

### Background Art

Patent Literature 1 discloses a power conditioner. Specifically, the power conditioner performs control which changes a phase of an output voltage from an inverter so as to bring the output voltage close to 0 V when the power conditioner detects an overcurrent, which refers to a situation where a current value of an output current from the inverter exceeds an allowable current value, during self-sustained operation mode.

### Citation List

### Patent Literature

[PTL 1] JP 2022-019159 A

### Summary of the Invention

### Problem to be Solved by the Invention

Consider a case where there is a grid fault in a power grid. If an output current from a power conditioner (an inverter to be specific) detects an overcurrent, and output from the inverter is stopped, a load in a power grid cannot be continuously operated.

One object of the present disclosure is to provide a technique capable of inhibiting an output current from an inverter from falling into an overcurrent state in the event of a grid fault.

### Means for Solving the Problem

A first aspect of the present disclosure relates to a power conditioner. The power conditioner includes an inverter which converts DC power into AC power and supplies the AC power to a power grid and a control device which controls the inverter. The control device estimates a grid voltage on the basis of an output current from the inverter and a characteristic of an impedance between the inverter and the power grid. The control device also generates a correction voltage on the basis of a voltage left after removal of a high-frequency component from a difference voltage which is a difference between the estimated grid voltage and a target voltage. The control device further gives an instruction to the inverter on the basis of a voltage obtained by adding the correction voltage to the target voltage.

A second aspect of the present disclosure relates to a power control method. The power control method includes using an inverter to convert DC power into AC power and supply the AC power to a power grid, estimating a grid voltage on the basis of an output current from the inverter and a characteristic of an impedance between the inverter and the power grid, generating a correction voltage on the basis of a voltage left after removal of a high-frequency component from a difference voltage which is a difference between the estimated grid voltage and a target voltage, and giving an instruction to the inverter on the basis of a voltage obtained by adding the correction voltage to the target voltage.

### Advantageous Effects of the Invention

According to the present disclosure, a grid voltage is estimated on the basis of an output current from an inverter and a characteristic of an impedance between the inverter and a power grid. A correction voltage is generated on the basis of a voltage left after removal of a high-frequency component from a difference voltage which is a difference between the estimated grid voltage and a target voltage. An instruction is given to the inverter on the basis of a voltage obtained by adding the correction voltage to the target voltage. This makes it possible to inhibit the output current from the inverter from falling into an overcurrent state and continuously supply AC power to the power grid. Thus, the power grid can be stabilized.

### Brief Description of the Drawings

[Fig. 1]

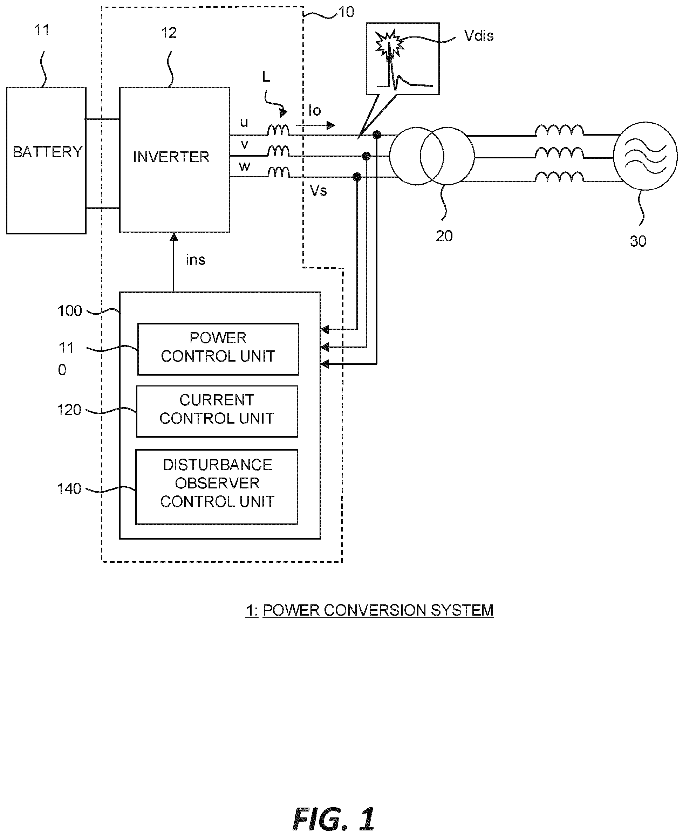

   Fig. 1 is a diagram for explaining an outline of a power conversion system.
[Fig. 2]

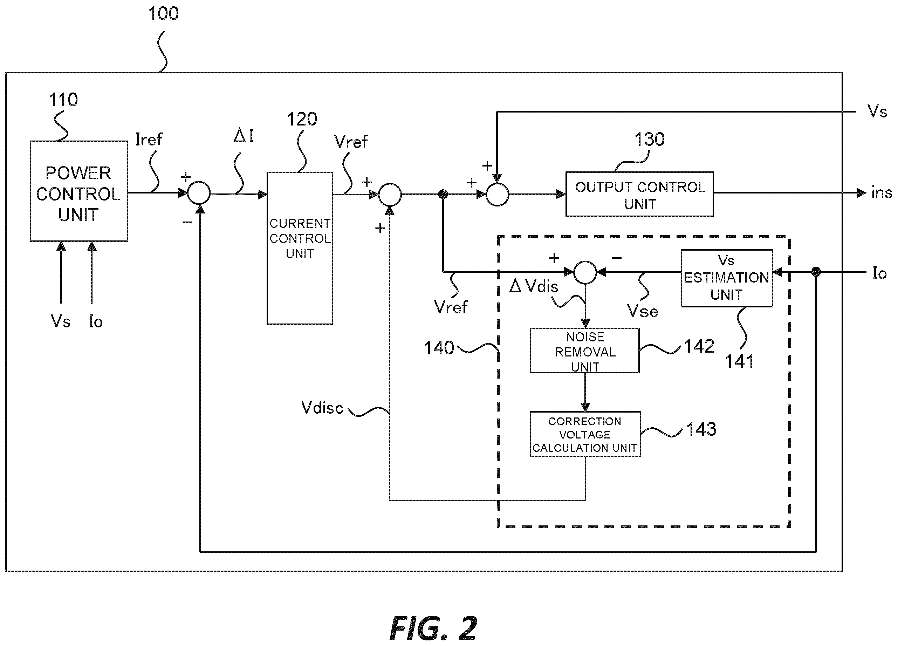

   Fig. 2 is a block diagram showing a functional example of a control device.
[Fig. 3]

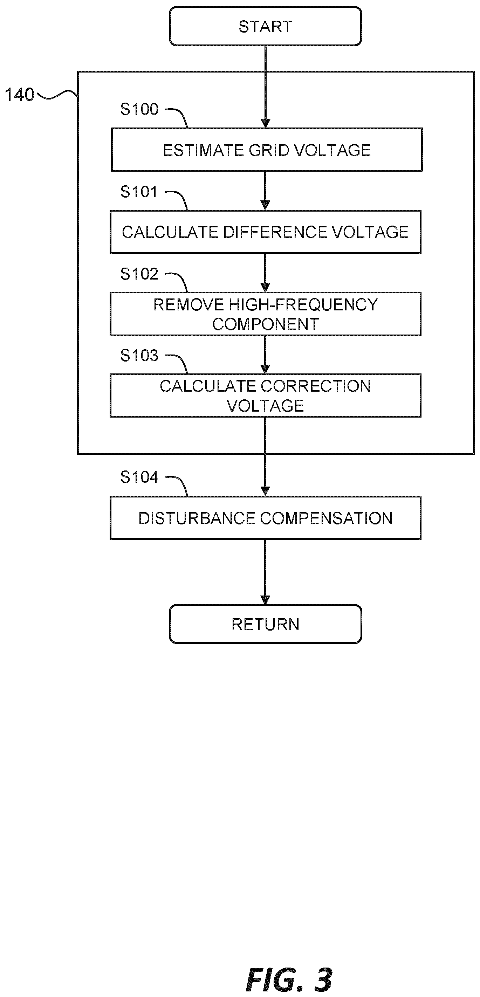

   Fig. 3 is a flowchart showing a processing example of the control device.
[Fig. 4]

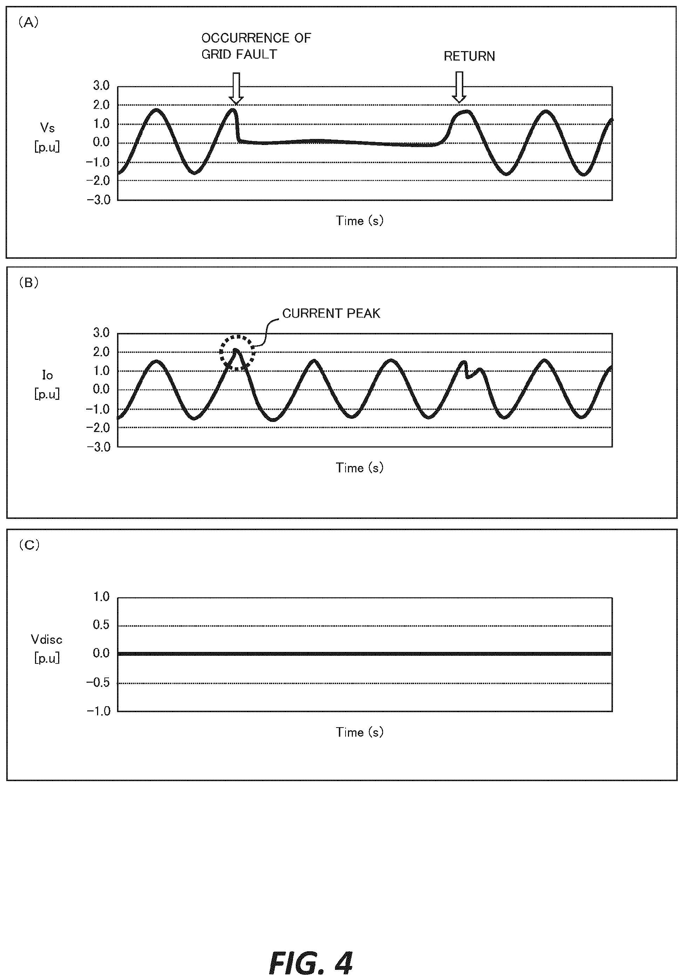

   Fig. 4 is an explanatory diagram showing an example of an output result from an inverter when a disturbance observer is not applied.
[Fig. 5]

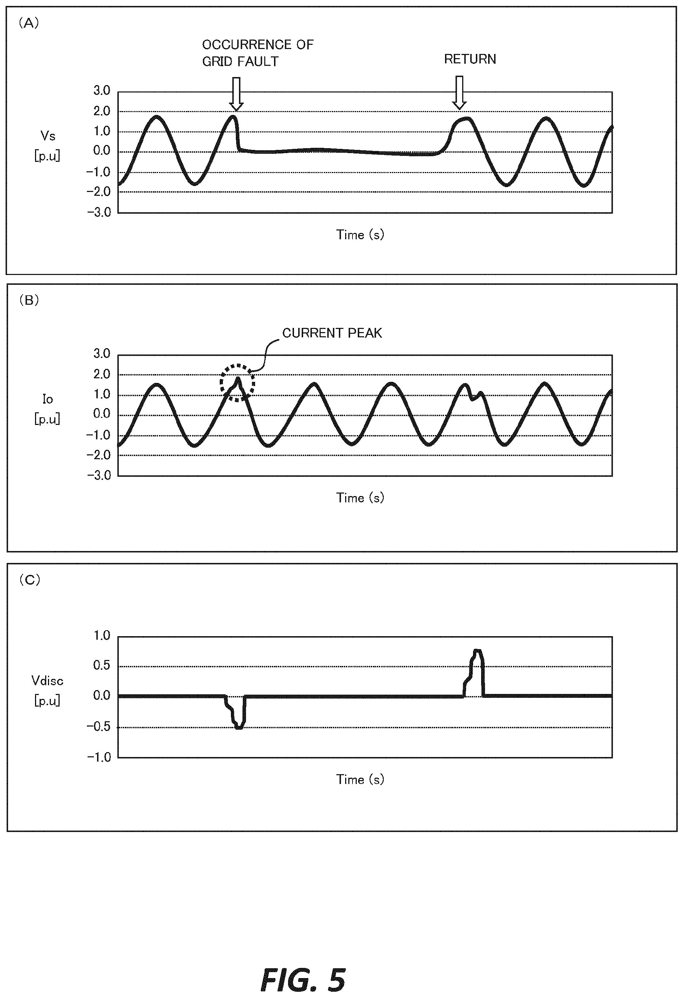

   Fig. 5 is an explanatory diagram showing an example of an output result from the inverter when the disturbance observer is applied.
[Fig. 6]

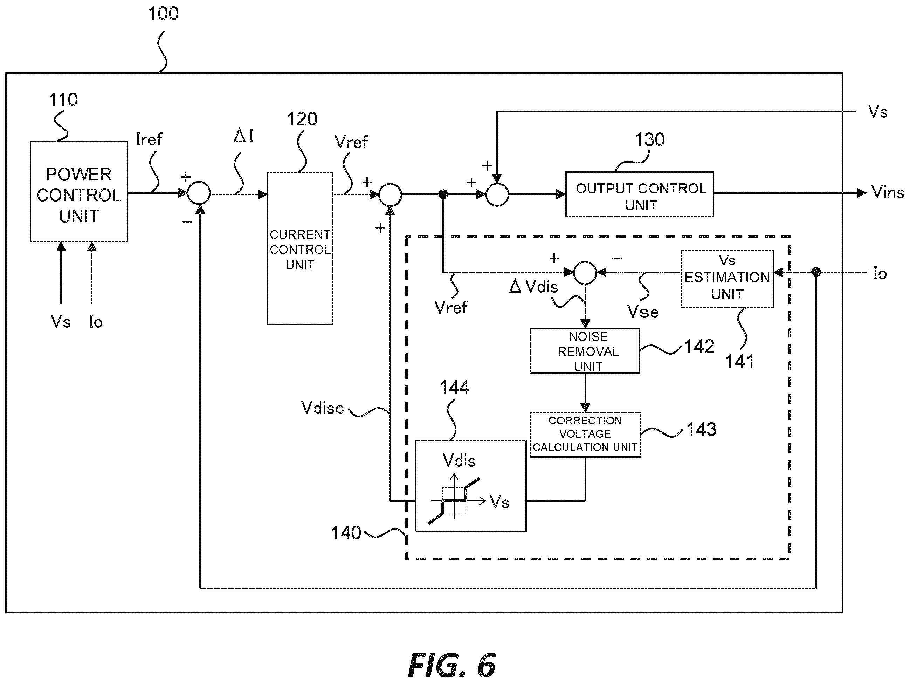

   Fig. 6 is a block diagram showing a functional example of a control device according to another embodiment.
[Fig. 7]

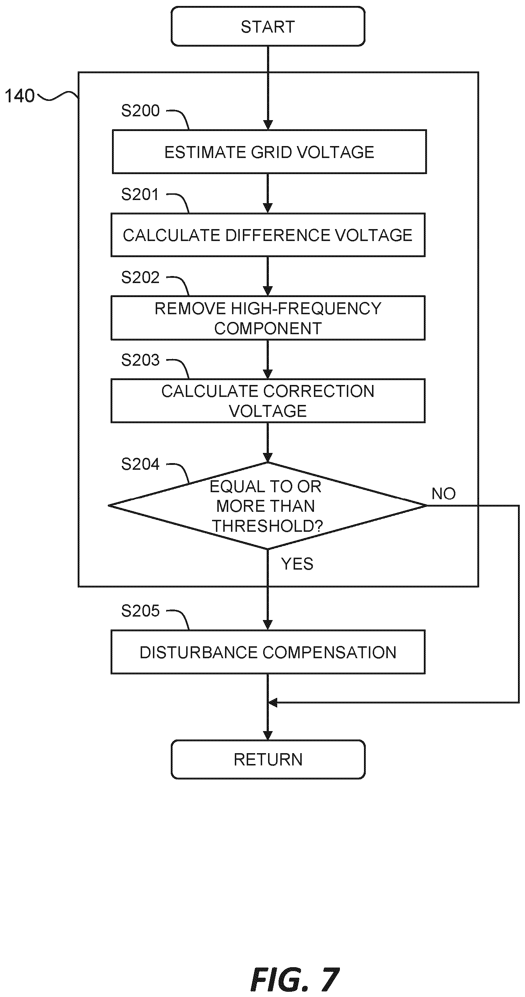

   Fig. 7 is a flowchart showing a processing example of the control device according to the another embodiment.

### Description of Embodiments

A power conditioner and a power control method according to an embodiment of the present disclosure will be described with reference to the accompanying drawings. Elements common among the drawings are denoted by identical reference numerals, and a duplicate description thereof will be omitted.

### 1. OUTLINE OF POWER CONVERSION SYSTEM

Fig. 1 is a diagram for explaining an outline of a power conversion system 1. The power conversion system 1 includes a battery 11, a power conditioner 10, a transformer 20, and a power grid 30. The power conditioner 10 is configured to include an inverter 12 and a control device 100.

The battery 11 is an electricity storage device which stores electricity generated from renewable energy. Sunlight, wind power, water power, and the like are given as examples of the renewable energy.

The inverter 12 is a device which converts DC power output from the battery 11 into AC power and supplies the AC power to the power grid 30 via the transformer 20. A current-controlled GFL (Grid Following) inverter, a voltage-controlled GFM (Grid Forming) inverter, and the like are given as examples of the inverter 12.

The control device 100 is connected to the inverter 12 and controls the inverter 12. An output voltage Vs (also called the grid voltage Vs) and an output current Io which are output from the inverter 12 are input to the control device 100. Note that the output voltage Vs and the output current Io that are to be input to the control device 100 are a detection value (hereinafter called a Vs detection value) of the output voltage Vs and a detection value (hereinafter called an Io detection value) of the output current Io. The Vs detection value and the Io detection value are detected by, a detector (not shown) which is provided between the power conditioner 10 and the power grid 30. In the example shown in Fig. 1, the Vs detection value and the Io detection value are detected between the power conditioner 10 and the transformer 20. The present disclosure, however, is not limited to this. The Vs detection value and the Io detection value may be detected, for example, between the transformer 20 and the power grid 30.

The output voltage Vs output from the inverter 12 is composed of three-phase voltages (Vsu, Vsv, and Vsw), and the output current Io output from the inverter 12 is composed of three-phase currents (Iou, Iov, and Iow). That is, a Vsu detection value, a Vsv detection value, and a Vsw detection value are included in the above-described Vs detection value, and an Iou detection value, an Iov detection value, and an Iow detection value are included in the above-described Io detection value.

The control device 100 includes a power control unit 110 and a current control unit 120. The power control unit 110 computes AC power output from the inverter 12 on the basis of the Vs detection value and the Io detection value that are input. The power control unit 110 calculates a current command (also called a target current) for the inverter 12 on the basis of the AC power. Details of an example of the calculation of the target current will be described later.

The current control unit 120 calculates a voltage command (also called a target voltage) for the inverter 12 on the basis of the target current obtained by the power control unit 110 and the Io detection value. Details of an example of the calculation of the target voltage will be described later.

Note that the control device 100 may calculate the voltage command for the inverter 12 under VSG (Virtual Synchronous Generator) control. VSG stands for a virtual synchronous generator which makes the inverter 12 artificially have dynamic characteristics of a synchronous generator. That is, the VSG control means controlling a virtual synchronous generator.

The control device 100 gives an instruction ins to the inverter 12 on the basis of the voltage command obtained by the current control unit 120 so as to bring the output voltage Vs from the inverter 12 close to the target voltage. The instruction ins may be a voltage instruction or a current instruction.

Consider here that a disturbance voltage Vdis which is developed by a disturbance is included in the output voltage Vs (the grid voltage Vs) from the inverter 12 in the event of a grid fault. The disturbance voltage Vdis is a disturbance which cannot be observed in the Vs detection value and the like and is, for example, a voltage when the grid voltage Vs rises instantaneously. In this case, the output current Io is assumed to fall into an overcurrent state. For this reason, the power conditioner 10 actuates an overcurrent trip function so as not to supply AC power to the power grid 30 for the purpose of, e.g., protecting the inverter 12. The overcurrent trip function opens (turns off) a circuit breaker (not shown) which is provided on an output side of the inverter 12, for example, if the output current Io from the inverter 12 is equal to or more than a reference current value. This prevents supply of AC power to the power grid 30.

However, even in the event of a grid fault, supply of stable AC power to the power grid 30 is demanded. This is, for example, a case where the power conditioner 10 is required to have an LVRT (Low Voltage Ride Through) function. LVRT refers to a function of, when an instantaneous voltage drop occurs due to a grid fault, maintaining the output current Io before the occurrence of the grid fault and minimizing influence on the power grid 30 unless an amount of voltage drop and a duration time period satisfy output stop conditions.

According to the control device 100, a disturbance observer control unit 140 is further executed. The disturbance observer control unit 140 generates a correction voltage for canceling the disturbance voltage Vdis included in the grid voltage Vs. The control device 100 gives the instruction ins to the inverter 12 on the basis of a voltage which is obtained by adding the correction voltage obtained by the disturbance observer control unit 140 to the target voltage. This makes it possible to inhibit the output current Io from the inverter 12 from falling into the overcurrent state and continuously supply AC power to the power grid 30. Thus, the power grid can be stabilized. Details of the disturbance observer control unit 140 will be described later.

### 2. EXAMPLE OF CONTROL DEVICE

### 2-1. CONFIGURATION EXAMPLE

The control device 100 has hardware which implements various types of functions. The hardware includes a processing circuit capable of high-speed computing. An FPGA (Field Programmable Gate Array), an ASIC (Application Specific Integrated Circuit), and the like are given as examples of the processing circuit. The hardware may include, besides the processing circuit, a computing element (e.g., a CPU or a GPU) which executes a program stored in a storage device.

### 2-2. FUNCTIONAL EXAMPLE

Fig. 2 is a block diagram showing a functional example of the control device 100 according to the embodiment. The control device 100 executes the power control unit 110. The power control unit 110 computes an actual measurement value of active power and an actual measurement value of reactive power on the basis of the Vs detection value and the Io detection value. The power control unit 110 performs control (also called APR (Automatic Power Regulator) control) on the basis of the actual measurement value of the active power and a target value for the active power such that the actual measurement value of the active power becomes the target value for the active power. The power control unit 110 performs control (also called AQR (Automatic Reactive Power Regulator) control) on the basis of the actual measurement value of the reactive power and a target value for the reactive power such that the actual measurement value of the reactive power becomes the target value for the reactive power. The power control unit 110 calculates a target current Iref on the basis of a target value for an active current which is obtained by the APR control and a target value for a reactive current which is obtained by the AQR control.

Note that the Vs detection value to be input to the power control unit 110 may be obtained via, for example, a PLL (Phase Locked Loop) which is provided in the control device 100. The PLL is a circuit which synchronizes phases of an input voltage signal and an output voltage signal. For this reason, phases of the Vs detection value and the output voltage Vs from the inverter 12 can be synchronized, and the inverter 12 and the power grid 30 are appropriately interconnected.

After the execution of the power control unit 110, the control device 100 executes the current control unit 120. The current control unit 120 performs control (also called ACR (Automatic Current Regulator) control) on the basis of a difference current ΔI which is a difference between the target current Iref obtained by the power control unit 110 and the Io detection value such that the difference current ΔI becomes the target current Iref. The ACR control is constant current control and performs feedback control which is PI control including proportional action and integral action. The current control unit 120 outputs a target voltage Vref in the ACR control.

After the execution of the current control unit 120, the control device 100 executes an output control unit 130. The output control unit 130 performs generation of the three-phase voltages (Vsu, Vsv, and Vsw) and PWM control which performs pulse width modulation on the three-phase voltages. The control device 100 outputs the instruction ins generated by the PWM control to the inverter 12.

Note that a voltage which is obtained by adding together the target voltage Vref and the Vs detection value is input to the output control unit 130. A voltage to be input to the output control unit 130 may be changed in accordance with presence or absence of a grid fault. For example, the output control unit 130 may input the voltage obtained by adding together the target voltage Vref and the Vs detection value if there is a grid fault and may input either one of the target voltage Vref and the Vs detection value if there is no grid fault.

After the execution of the current control unit 120, the control device 100 executes the disturbance observer control unit 140. The disturbance observer control unit 140 includes a Vs estimation unit 141, a noise removal unit 142, and a correction voltage calculation unit 143.

The Vs estimation unit 141 estimates the grid voltage Vs on the basis of the Io detection value and a characteristic of an impedance between the inverter 12 and the power grid 30. The estimated grid voltage Vs is called an estimated grid voltage Vse. The impedance includes an inductance L of a reactor shown in Fig. 1. The estimated grid voltage Vse is estimated by multiplying the Io detection value with a predetermined constant. The predetermined constant is a value obtained by multiplying an angular frequency ω with the inductance L. That is, the predetermined constant is represented by ωL (= 2πfL). f is 50 Hz or 60 Hz. For this reason, a voltage when the output current Io flows through the reactor can be estimated without use of a sensor.

The noise removal unit 142 removes a high-frequency component from a difference voltage ΔVdis, which is left after subtraction of the estimated grid voltage Vse obtained by the Vs estimation unit 141 from the target voltage Vref obtained by the current control unit 120, on the basis of the difference voltage ΔVdis. A LPF (Low Pass Filter) is used to a method of removing a high-frequency component from the difference voltage ΔVdis. Note that, if the grid voltage Vs includes the disturbance voltage Vdis in the event of a grid fault, the difference voltage ΔVdis is estimated to be the disturbance voltage Vdis.

The correction voltage calculation unit 143 generates a correction voltage Vdisc on the basis of a voltage which is left after removal of the high-frequency component from the difference voltage ΔVdis. Specifically, the correction voltage calculation unit 143 performs control so as to shift the voltage left after the removal of the high-frequency component from the difference voltage ΔVdis within a target range. The control performs, for example, feedback control which is P control including proportional action. Note that the disturbance observer control unit 140 may be enabled only when there is a grid fault.

The control device 100 then executes a process (disturbance compensation) of adding the correction voltage Vdisc obtained by the disturbance observer control unit 140 to the target voltage Vref. With this process, the disturbance voltage Vdis included in the estimated grid voltage Vse is reduced by the correction voltage Vdisc in the event of a grid fault. This makes it possible to inhibit the output current Io from the inverter 12 from falling into the overcurrent state and continuously supply AC power to the power grid 30. Thus, the power grid 30 can be stabilized.

### 2-3. PROCESSING EXAMPLE

Fig. 3 is a flowchart showing a processing example of the control device 100 according to the embodiment. Specifically, Fig. 3 summarily shows an example of disturbance compensation control which compensates for the disturbance voltage Vdis.

In step S100, the control device 100 estimates the grid voltage Vs, i.e., calculates the estimated grid voltage Vse on the basis of the Io detection value and the characteristic of the impedance between the inverter 12 and the power grid 30. After that, the process advances to step S101.

In step S101, the control device 100 calculates the difference voltage ΔVdis left after subtraction of the estimated grid voltage Vse from the target voltage Vref. After that, the process advances to step S102. If the disturbance voltage Vdis is included in the grid voltage Vs in the event of a grid fault, the difference voltage ΔVdis is estimated to be the disturbance voltage Vdis.

In step S102, the control device 100 removes a high-frequency component from the difference voltage ΔVdis. After that, the process advances to step S103.

In step S103, the control device 100 calculates the correction voltage Vdisc on the basis of a voltage left after the removal of the high-frequency component from the difference voltage ΔVdis. The process advances to step S104.

In step S104, the control device 100 executes the process (disturbance compensation) of adding the correction voltage Vdisc to the target voltage Vref.

### 3. EXAMPLE OF OUTPUT RESULT FROM INVERTER

Fig. 4 is an explanatory diagram showing an example of an output result from the inverter 12 when the disturbance observer control unit 140 is not applied in the event of a grid fault. Fig. 5 is an explanatory diagram showing an example of an output result from the inverter 12 when the disturbance observer control unit 140 is applied in the event of a grid fault.

(A) in Fig. 4 and (A) in Fig. 5 each show one example of a waveform of the Vs detection value. (B) in Fig. 4 and (B) in Fig. 5 each show one example of a waveform of the Io detection value. (C) in Fig. 4 and (C) in Fig. 5 each show one example of a waveform of the correction voltage Vdisc. Note that the waveforms of the Vs detection value and the waveforms of the Io detection value in Figs. 4 and 5 show any one of three phases (U, V, and W). Vertical axes of graphs shown in Figs. 4 and 5 are represented by the PU (Per Unit) method. Note that the present disclosure is not limited to this. The vertical axes of the graphs shown in Figs. 4 and 5 may each represent a PU value as a percentage.

If the disturbance observer control unit 140 is not applied, the correction voltage Vdisc remains at "0 PU" and is not generated both around a time of occurrence of the grid fault and around a time of return from the grid fault, as shown in (C) in Fig. 4. On the other hand, if the disturbance observer control unit 140 is applied, the correction voltage Vdisc for canceling the disturbance voltage Vdis is generated around a time of occurrence of the grid fault, as shown in (C) in Fig. 5. If the Vs detection value is smaller than the target voltage Vref around a time of return from the grid fault, the correction voltage Vdisc for canceling a deficiency in voltage which is a difference between the Vs detection value and the target voltage Vref is generated, as shown in (C) in Fig. 5.

In the examples shown in (B) in Fig. 4 and (B) in Fig. 5, a peak value of the Io detection value in the event of a grid fault is lower when the disturbance observer control unit 140 is applied than when the disturbance observer control unit 140 is not applied. That is, application of the disturbance observer control unit 140 in the event of a grid fault allows inhibition of an overcurrent in the output current Io from the inverter 12. Thus, the inverter 12 can continuously supply AC power to the power grid 30 and minimize influence on the power grid 30.

### 4. EFFECTS

In the power conditioner 10 according to the present embodiment, the grid voltage Vs is estimated on the basis of the output current Io from the inverter 12 and the characteristic of the impedance between the inverter 12 and the power grid 30. The correction voltage Vdisc is generated on the basis of a voltage which is left after removal of a high-frequency component from the difference voltage ΔVdis that is a difference between the estimated grid voltage Vs (the estimated grid voltage Vse) and the target voltage Vref. The instruction ins is given to the inverter 12 on the basis of a voltage obtained by adding the correction voltage Vdisc to the target voltage Vref. This makes it possible to inhibit the output current Io from the inverter 12 from falling into an overcurrent state and continuously supply AC power to the power grid 30. Thus, the power grid can be stabilized.

### 5. ANOTHER EMBODIMENT

Fig. 6 is a block diagram showing a functional example of a control device 100 according to another embodiment. A difference from the control device 100 according to the above-described embodiment is the presence or absence of a threshold judgment unit 144 in a disturbance observer control unit 140.

The control device 100 according to the another embodiment includes the threshold judgment unit 144 in the disturbance observer control unit 140. Specifically, the threshold judgment unit 144 judges whether a correction voltage Vdisc which is obtained by a correction voltage calculation unit 143 satisfies a threshold condition. If the correction voltage Vdisc is judged to satisfy the threshold condition, the threshold judgment unit 144 outputs the correction voltage Vdisc. On the other hand, if the correction voltage Vdisc is judged not to satisfy the threshold condition, the threshold judgment unit 144 does not output the correction voltage Vdisc.

Note that the threshold condition includes that an absolute value for the correction voltage Vdisc be equal to or more than a threshold or that an absolute value for a voltage which is left after removal of a low-frequency component from the correction voltage Vdisc be equal to or more than a threshold. A HPF (High Pass Filter) is used to a method of removing the low-frequency component from the correction voltage Vdisc.

Fig. 7 is a flowchart showing a processing example of the control device according to the another embodiment. Only differences from Fig. 3 described above will be described here. Specifically, S200 to S203 and S205 are the same processes as S100 to S104 described above, and a description thereof will be omitted.

In step S204, the control device 100 judges whether the correction voltage Vdisc is equal to or more than the threshold. If the correction voltage Vdisc is judged to be equal to or more than the threshold (YES in step S204), the process advances to step S205. Otherwise (NO in step S204), the process ends.

In the control device 100 according to the another embodiment, the threshold judgment unit 144 is included in the disturbance observer control unit 140. If the correction voltage Vdisc satisfies the threshold condition, the threshold judgment unit 144 outputs the correction voltage Vdisc. For this reason, a certain or higher level of disturbance voltage Vdis which is included in an estimated grid voltage Vse is reduced by the correction voltage Vdisc. In this case, the same effects as in the above-described embodiment are obtained.

### Reference Signs List

1 Power conversion system
10 Power conditioner
11 Battery
12 Inverter
20 Transformer
30 Power grid
100 Control device
110 Power control unit
120 Current control unit
130 Output control unit
140 Disturbance observer control unit

## Claims

1. A power conditioner comprising:
an inverter which converts DC power into AC power and supplies the AC power to a power grid; and
a control device which controls the inverter,
wherein the control device is configured to
estimate a grid voltage on the basis of an output current from the inverter and a characteristic of an impedance between the inverter and the power grid,
generate a correction voltage on the basis of a voltage left after removal of a high-frequency component from a difference voltage which is a difference between the estimated grid voltage and a target voltage, and
give an instruction to the inverter on the basis of a voltage obtained by adding the correction voltage to the target voltage.

2. The power conditioner according to claim 1, wherein
the control device performs, in a process of outputting the instruction to the inverter,
judging whether the correction voltage satisfies a threshold condition, and
giving the instruction to the inverter on the basis of the voltage obtained by adding the correction voltage to the target voltage if the correction voltage is judged to satisfy the threshold condition.

3. The power conditioner according to claim 2, wherein
the threshold condition includes that an absolute value for the correction voltage be equal to or more than a threshold or that an absolute value for a voltage left after removal of a low-frequency component from the correction voltage be equal to or more than a threshold.

4. The power conditioner according to claim 1, wherein
the target voltage is a voltage which is obtained by performing control such that a difference current which is a difference between a target current and the output current from an inverter becomes the target current.

5. The power conditioner according to claim 1, wherein
the correction voltage is a voltage which is controlled so as to shift the voltage left after the removal of the high-frequency component from the difference voltage within a target range.

6. The power conditioner according to claim 1, wherein
the impedance includes an inductance of a reactor, and
the estimated grid voltage is estimated by multiplying the output current from the inverter with a predetermined constant.

7. The power conditioner according to claim 6, wherein
the predetermined constant is a value obtained by multiplying an angular frequency with the inductance.

8. A power control method comprising:
using an inverter to convert DC power into AC power and supply the AC power to a power grid;
estimating a grid voltage on the basis of an output current from the inverter and a characteristic of an impedance between the inverter and the power grid;
generating a correction voltage on the basis of a voltage left after removal of a high-frequency component from a difference voltage which is a difference between the estimated grid voltage and a target voltage; and
giving an instruction to the inverter on the basis of a voltage obtained by adding the correction voltage to the target voltage.
